# EUROPÄISCHE PATENTSCHRIFT

(11) **EP 1 491 793 B1**
(45) Veröffentlichungstag und Bekanntmachung des Hinweises auf die Patenterteilung: **26.08.2009**
(21) Anmeldenummer: 04011027.2
(22) Anmeldetag: 10.05.2004
(51) Int. Cl.: F16F 15/26, F01L 1/02

(54) **Ausgleichseinrichtung für Massenkräfte einer Brennkraftmaschine**
Balancing arrangement for the inertial forces of an internal combustion engine
Arrangement d'équilibrage pour les forces d'inertie d'un moteur à combustion interne

(30) Priorität: 27.06.2003 DE 10328992
(43) Veröffentlichungstag der Anmeldung: 29.12.2004
(73) Patentinhaber: Bayerische Motoren Werke Aktiengesellschaft, 80809 München (DE)
(72) Erfinder: Rudert, Stefan, 85777 Fahrenzhausen (DE); Nehse, Wolfgang, 86934 Reichling (DE)

(56) Entgegenhaltungen:
- DE-A- 10 226 076
- FR-A- 2 619 881
- FR-A- 2 822 897
- GB-A- 662 143
- GB-A- 2 079 375
- US-A- 5 375 571

## Beschreibung

Die Erfindung betrifft gemäß dem Oberbegriff des Anspruchs 1 eine Ausgleichseinrichtung für Massenkräfte einer Brennkraftmaschine mit einer Kurbelwelle, wenigstens einer Nockenwelle und einer Zwischenwelle zum Antrieb der wenigsten einen Nockenwelle.

Derartige Ausgleichseinrichtungen sind bekannt, beispielsweise zeigt und beschreibt die DE 102 26 076 A1 einen Motorradmotor in V- oder Boxer-Bauweise, welcher zum Schwingungsausgleich eine mit der Kurbelwelle in Verbindung stehende und zu dieser gegenläufig mit gleicher Drehzahl drehende Ausgleichswelle aufweist. Die Brennkraftmaschine gemäß der DE 102 26 076 A1 weist ferner Nockenwellen auf, welche ausgehend von der Kurbelwelle unter Zwischenschaltung einer Zusatzwelle mittels Ketten angetrieben sind und mit halber Kurbelwellendrehzahl drehen.

GB-A-662 143 offenbart eine Ausgleichseinrichtung mittels Zwischenwelle mit angebundenen Ausgleichsmassen.

Es wird einerseits Bauraum durch die Nockenwellen und andererseits durch die Ausgleichswelle beansprucht, was sich insbesondere bei kompakten Boxermotoren als extrem nachteilig erwiesen hat.

Aufgabe der Erfindung ist es, eine eingangs genannte Ausgleichseinrichtung bereit zu stellen, welche einen wirksamen Schwingungsausgleich bei gleichzeitig kompakter und platzsparender Bauweise ermöglicht und darüber hinaus Vorteile hinsichtlich des Baugewichts mit sich bringt.

Die Aufgabe wird mit den Merkmalen des Anspruchs 1 gelöst, indem die Ausgleichswelle zur Zwischenwelle koaxial angeordnet und die Zwischenwelle zur Aufnahme der Ausgleichswelle hohl ausgebildet ist.

Vorteilhafte Weiterbildungen und Ausführungsbeispiele sind Gegenstand der Unteransprüche.

Von Vorteil ist es, wenn ein erster endseitiger Bereich der Ausgleichswelle als Ausgleichsmasse und/oder zur Aufnahme einer Ausgleichsmasse ausgebildet ist, ein zweiter endseitiger Bereich der Ausgleichswelle weist ein Zahnrad zum Antrieb der Ausgleichswelle auf.

Zweckmäßigerweise ist die Ausgleichswelle aus Montagegründen teilbar ausgebildet, wobei die Ausgleichswelle vorliegend im Bereich einer Lagerstelle geteilt ist. Gelagert ist die Ausgleichswelle bevorzugterweise im Kurbelgehäuse und/oder im Kurbelgehäusedeckel beispielsweise mittels als Kugellager ausgebildeter Wälzlager.

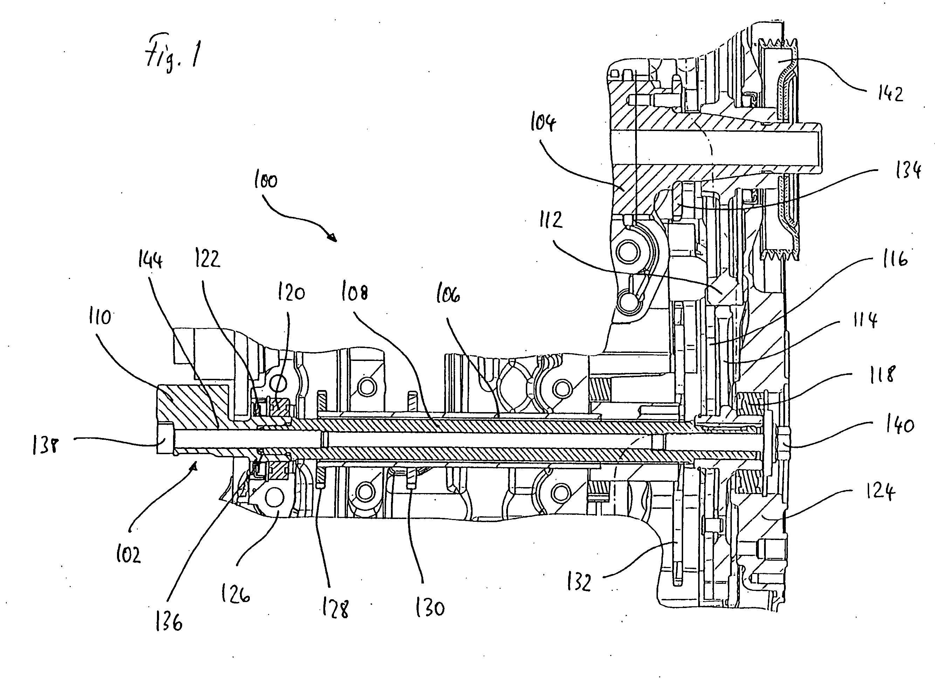

Nachfolgend ist unter Bezugnahme auf die einzige Figur 1, welche schematisch und beispielhaft eine Ausgleichseinrichtung mit koaxial zur Zwischenwelle angeordneter Ausgleichswelle zeigt, ein besonders bevorzugtes Ausführungsbeispiel der Erfindung naher erläutert.

Die Ausgleichseinrichtung 100 gemäß Figur 1 bezieht sich auf eine hier nicht näher dargestellte Brennkraftmaschine, insbesondere auf eine zweizylindrige Brennkraftmaschine in Boxerbauweise zum Antrieb eines Kraftrades.

Die Brennkraftmaschine umfasst in einem Kurbelgehäuse 126 gelagert eine Kurbelwelle 104, welche endseitig ein Kettenrad 134 zum Antrieb einer die Nockenwelle(n) antreibende Zwischenwelle 106 sowie ein Zahnrad 112 zur Verbindung mit einer Ausgleichswelle 102 aufweist, ferner ist eine Riemenscheibe 142 zum Antrieb von Nebenaggregaten vorgesehen.

Das Kettenrad 134 liegt an einem Absatz der Kurbelwelle an und ist in axialer Richtung mit dieser verschraubt; zur Aufnahme des Zahnrades 112 weist die Kurbelwelle 104 ein kegeliges Wellenende auf, wobei zur Verdrehsicherung eine Passfeder vorgesehen ist. Mittels des Kettenrades 134 ist über eine Kette und ein Kettenrad 132 die zur Kurbelwelle 104 parallele und mit dieser gleichsinnig, jedoch mit halber Drehzahl drehende Zwischenwelle 106 antreibbar, die ihrerseits im Kurbelgehäuse gelagert ist und zum Antrieb der Nockenwelle(n) mittels Kette(n) Kettenräder 128, 130 aufweist.

Um einen zumindest annähernd vollständigen Ausgleich der durch die periodischen Verbrennungen in der Brennkraftmaschine angeregten Schwingungen 1. Ordnung zu erreichen, ist die Ausgleichswelle 102 vorgesehen. Sie ist koaxial zur Zwischenwelle 106 angeordnet, wobei zu ihrer Aufnahme die Zwischenwelle 106 hohl ausgebildet ist; vorliegend ist eine Lagerung der Ausgleichswelle 102 in der Zwischenwelle 106 nicht vorgesehen, so dass beide Wellen 102, 106 berührungsfrei gegeneinander drehbar sind. Der Antrieb der zur Kurbelwelle 104 mit gleicher Drehzahl gegensinnig drehenden Ausgleichswelle 102 erfolgt mittels des Zahnrades 112 über des Zahnrad 114.

Ebenfalls mit dem Zahnrad 112 in Verbindung steht das auf der Ausgleichswelle 102 dem Zahnrad 114 benachbart angeordnete Zahnrad 116. Das Zahnrad 116 ist gegenüber dem Zahnrad 114 drehbar und federkraftbeaufschlagt derart mit diesem verspannt, dass jeweils Zähne der Zahnräder 114, 116, welche mit derselben Lücke des Zahnrades 112 korrespondieren, im Sinne einer Spielelimination federkraftbeaufschlagt an den Flanken der Lücke des Zahnrades 112 anliegen. Die Federkraft beeinflusst das Ausgleichsverhalten der Einrichtung 100 und. bedingt einen besonders stoß- und damit geräuscharmen Schwingungsausgleich. Die Nabe des Zahnrads 114 ist mit den Innenring des Lagers 118 mittels einer Schraube 140 gegen einen Wellenabsatz verspannt.

Die Ausgleichswelle 102 ist im vorliegenden Ausführungsbeispiel zweifach mittels als Kugellager ausgebildeter Wälzlager 118, 120 im Kurbelgehäusedeckel 124 und im Kurbelgehäuse 126 gelagert, wobei gegebenenfalls in einem anderen Ausführungsbeispiel Gleitlager verwendet werden können. Die Ausgleichswelle 102 umfasst endseitig eine Ausgleichsmasse 110, welche außerhalb des Kurbelgehäuses 126 angeordnet ist, im Bereich der Wellendurchführung ist eine Dichtung 122 vorgesehen.

Aus Montagegründen ist die Ausgleichswelle 102 geteilt ausgebildet. Die beiden Wellenteile 108 und 144 werden axial gefügt und sind mittels einer Zahnprofilierung gegen Verdrehen gesichert. Die Anordnung der Fügestelle 136 im Bereich der Lagerstelle 120 verhindert unterstützend eine unerwünschte Aufweitung des äußeren Wellenteils; in axialer Richtung ist zur Befestigung eine Schraube 138 vorgesehen, welche in eine Innengewinde des Wellenteils 108 eingreift. Vorliegend ist die Ausgleichsmasse 110 integraler Bestandteil der Ausgleichswelle 102, jedoch kann in einem anderen Ausführungsbeispiels der Erfindung zweckmäßigerweise die Ausgleichsmasse 110 separat ausgebildet sein; gegebenenfalls kann die Ausgleichswelle 102 einteilig ausgeführt sein.

## Patentansprüche

1. Ausgleichseinrichtung für Massenkräfte einer Brennkraftmaschine mit einer Kurbelwelle, wenigstens einer Nockenwelle und einer Zwischenwelle zum Antrieb der wenigsten einen Nockenwelle, **gekennzeichnet durch** eine koaxial zur Zwischenwelle (106) angeordnete Ausgleichswelle (102), wobei die Zwischenwelle (106) zur Aufnahme der Ausgleichswelle (102) hohl ausgebildet ist.

2. Ausgleichseinrichtung nach Anspruch 1, **dadurch gekennzeichnet, dass** ein erster endseitiger Bereich der Ausgleichswelle (102) als Ausgleichsmasse (110) und/oder zur Aufnahme einer Ausgleichsmasse (110) ausgebildet ist.

3. Ausgleichseinrichtung nach einem der vorhergehenden Ansprüche, **dadurch gekennzeichnet, dass** die Ausgleichswelle (102) teilbar ausgebildet ist:

4. Ausgleichseinrichtung nach einem der vorhergehenden Ansprüche, **dadurch gekennzeichnet, dass** die Ausgleichswelle (102) im Kurbelgehäuse (126) und/oder im Kurbelgehäusedeckel (124) gelagert ist.

## Claims

1. A device for compensating inertia forces in an internal combustion engine comprising a crankshaft, at least one camshaft and an intermediate shaft for driving the at least one camshaft, **characterised by** a compensating shaft (102) disposed coaxially with the intermediate shaft (106), wherein the intermediate shaft (106) is made hollow in order to receive the compensating shaft (102).

2. A compensating device according to claim 1, **characterised in that** a first end region of the compensating shaft (102) is in the form of a counterweight (110) and/or is constructed so as to receive a counterweight (110).

3. A compensating device according to any of the preceding claims, **characterised in that** the compensating shaft (102) is divisible.

4. A compensating device according to any of the preceding claims, **characterised in that** the compensating shafts (102) is mounted in the crankcase (126) and/or in the crankcase lid (124).

## Revendications

1. Installation d'équilibrage des forces d'inertie d'un moteur à combustion interne comportant un vilebrequin, au moins un arbre à cames et un arbre intermédiaire pour entraîner l'arbre à cames,
**caractérisée par**
un arbre d'équilibrage (102) coaxial à l'arbre intermédiaire (106), l'arbre intermédiaire (106) étant creux pour recevoir l'arbre d'équilibrage (102).

2. Installation d'équilibrage selon la revendication 1,
**caractérisée en ce qu'**
une première zone du côté de l'extrémité de l'arbre d'équilibrage (102) est réalisée sous la forme d'une masse d'équilibrage (110) et/ou reçoit une masse d'équilibrage (110).

3. Installation d'équilibrage selon les revendications précédentes,
**caractérisée en ce que**
l'arbre d'équilibrage (102) est réalisé de manière divisible.

4. Installation d'équilibrage selon les revendications précédentes,
**caractérisée en ce que**
l'arbre d'équilibrage (102) est monté dans les paliers du carter de vilebrequin (126) et/ou du chapeau (124) du carter de vilebrequin.
